# EUROPEAN PATENT APPLICATION

(11) **EP 2 199 903 A1**
(43) Date of publication of application: **23.06.2010**
(21) Application number: 09011096.6
(22) Date of filing: 28.08.2009
(51) Int. Cl.: G06F 9/44

(54) **Metadata model repository**

(30) Priority: 19.12.2008 US 339339
(71) Applicant: SAP AG, 69190 Walldorf (DE)
(72) Inventor: Pfeifer, Wolfgang, 69190 Walldorf (DE); Said, Bare, 69190 Walldorf (DE); Kazmaier, Gerrit Simon, 69190 Walldorf (DE)
(74) Representative: Müller-Boré & Partner Patentanwälte

(57) **Abstract**

A system includes a data structure comprising a business object metadata model describing a generic business object model, executable program code of a transactional service to create a second data structure comprising a specific business object model based on the business object metadata model, and a persistent storage to store the second data structure comprising the specific business object model. Some aspects include creation of an electronic data structure comprising a business object metadata model describing a generic business object model, execution, using a processor, of program code of a transactional service to create a second electronic data structure comprising a specific business object model based on the business object metadata model, and storage of the second electronic data structure comprising the specific business object model in a persistent storage.

## Description

### FIELD

Some embodiments relate to enterprise services based on business objects and supported by an application platform. More specifically, some embodiments relate to a public solution model to facilitate development of business applications using an application platform.

### BACKGROUND

A business object is a software model representing real-world items used during the transaction of business. For example, a business object may represent a business document such as a sales order, a purchase order, or an invoice. A business object may also represent items such as a product, a business partner, or a piece of equipment. Particular documents (e.g., SalesOrder SO435539) and/or items (e.g., ACME corporation) are represented by instances of their representing business object, or business object instances.

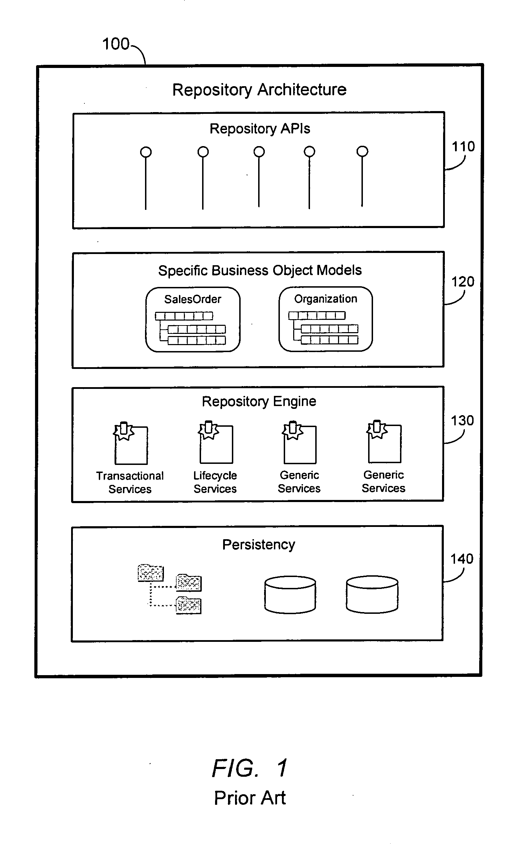

FIG. 1 illustrates conventional repository architecture 100 to support the use of business object models and instances thereof. Architecture 100 may comprise a business process platform such as the Application Platform provided by SAP of Walldorf, Germany.

Architecture 100 includes application programming interfaces 110 which provide read and write access to business object instances. The business object instances accessed via application programming interfaces 110 are instances of specific business object models 120. Each of specific business object models 120 comprises metadata describing a specific business object model, or class.

Repository engine 130 includes transactional services to create and administrate business object instances, and lifecycle services to manage business object instance lifecycles. Some services of repository engine 130 may provide the access to business object instances exposed by application programming interfaces 110. The business object instances themselves are stored in persistency 140, which may comprise any suitable types of structures.

Notably, each of specific business object models 120 conforms to a generic business object model (i.e., a meta-metadata model). As a result, the same application programming interfaces 110, services of repository engine 130, and persistency 140 can be used for all instances of specific business object models 120. The foregoing synergies facilitate the use of object instances of any newly-developed specific business object model.

However, the development of new specific business object models presents significant challenges. Due to the well-developed infrastructure supporting business object instances, a proposed new specific business object model must pass through many levels of manual review and compatibility checks before it may be deployed in a business process platform. Changes to an existing specific business object model are similarly difficult to coordinate.

Other components of an end-to-end business solution are developed and managed differently than described above. For example, user interfaces and analytics/reporting applications which interact with business object instances are developed and executed using different model-based infrastructures. Integration of these components with a business object model-based architecture (e.g., implemented using SAP Advanced Business Programming Language (ABAP)) is awkward due to differences in technologies and modeling approaches.

### BRIEF DESCRIPTION OF THE DRAWINGS

FIG. 1 is a block diagram illustrating a conventional repository architecture.
FIG. 2 is a general block diagram illustrating a metadata repository architecture according to some embodiments.
FIG. 3 is a detailed block diagram illustrating a metadata repository architecture according to some embodiments.
FIG. 4 is a diagram of a generic business object model according to some embodiments.
FIG. 5 is a diagram illustrating modeling of intermodel associations according to some embodiments.

### DETAILED DESCRIPTION

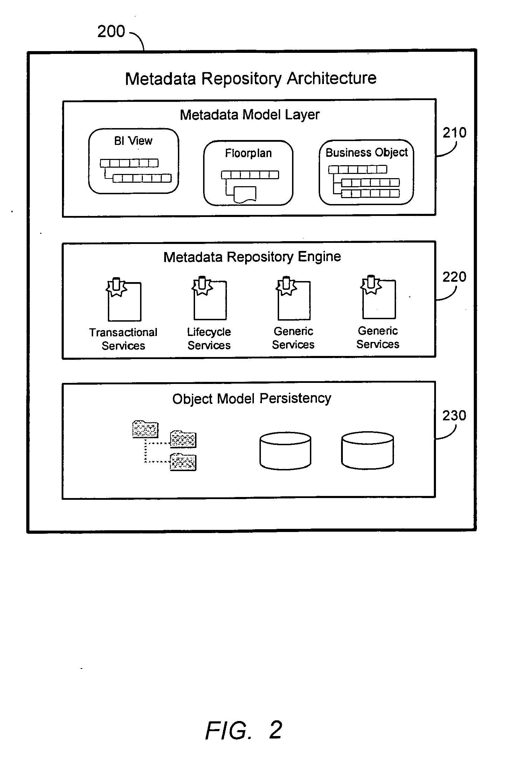

FIG. 2 is a block diagram of metadata repository architecture 200 according to some embodiments. FIG. 2 represents a logical architecture for describing some embodiments, and actual implementations may include more or different components arranged in any manner. Architecture 200 may be implemented using any number of computer devices, metadata models, object models and model instances may be embodied in any types of electronic data structures, and one or more processors may execute program code to perform processes described herein.

Architecture 200 includes metadata model layer 210 including metadata models describing, respectively, generic models of a BI view, a floorplan (i.e., a user interface layout), and a business object. An instance of the business object metadata model, for example, may comprise the SalesOrder object model or the Organization object model of FIG. 1. The metadata models of layer 210 may be embodied in any type of data structure, including but not limited to extensible Markup Language files. Other metadata models that may reside in metadata model layer 210 may describe, for example, a work center, UI texts, and process components, but embodiments are not limited thereto.

Each of the metadata models of layer 210 may comprise an instance of a same meta-metadata model. The meta-metadata model may consist of nodes, composite associations, associations, elements structure and attribute properties. Development of specific BI view models, specific floorplan models and specific business object models may therefore proceed using the same development technologies, thereby facilitating integration of the various specific object models. In this regard, metadata model layer 210 may provide a facility to specify and persist logical dependencies between the metadata models.

According to some embodiments, the meta-metadata model is identical to the business object metadata model. In other words, the business object metadata model may comprise an instance of itself. Consequently, the services and application programming interfaces used to support the business object instances of architecture 100 may be employed to support instances of the metadata models of layer 210. Metadata repository engine 220 may therefore be equivalent to repository engine 130 of FIG. 1. Again, the instances of the metadata models of layer 210 comprise specific object models such as object models 120 of architecture 100.

Unlike architecture 100, data structures representing the specific object models are stored in object model persistency 230. As in the conventional storage of object instance data, the data structures representing the specific object models may be stored in database tables and/or any other suitable format. Architecture 200 may therefore provide the capability to create, change and store different object models (as opposed to only the instances thereof) and to support their lifecycle management (e.g., shipment, change management, versioning). Lifecycles of the specific object models may be managed (e.g., using logical dependencies specified in metadata model layer 210) by lifecycle management services of repository engine 220, and transactional services of repository engine 220 may be used to provide consistent read and write access to the data structures representing the specific object models.

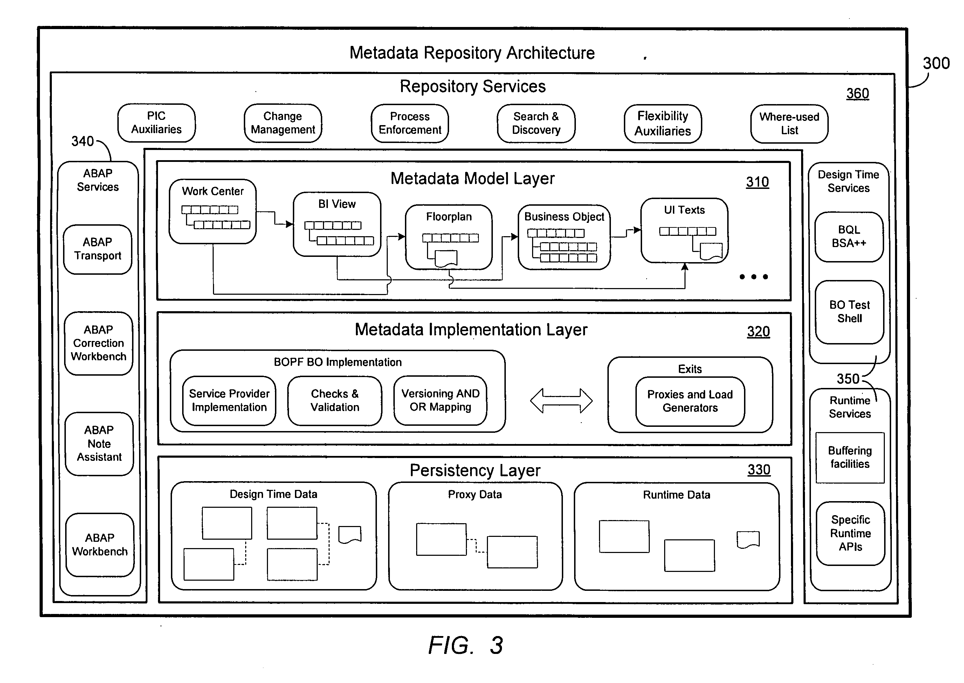

FIG. 3 illustrates architecture 300 according to some embodiments. Architecture 300 may comprise a specific implementation of architecture 200, but embodiments are not limited thereto.

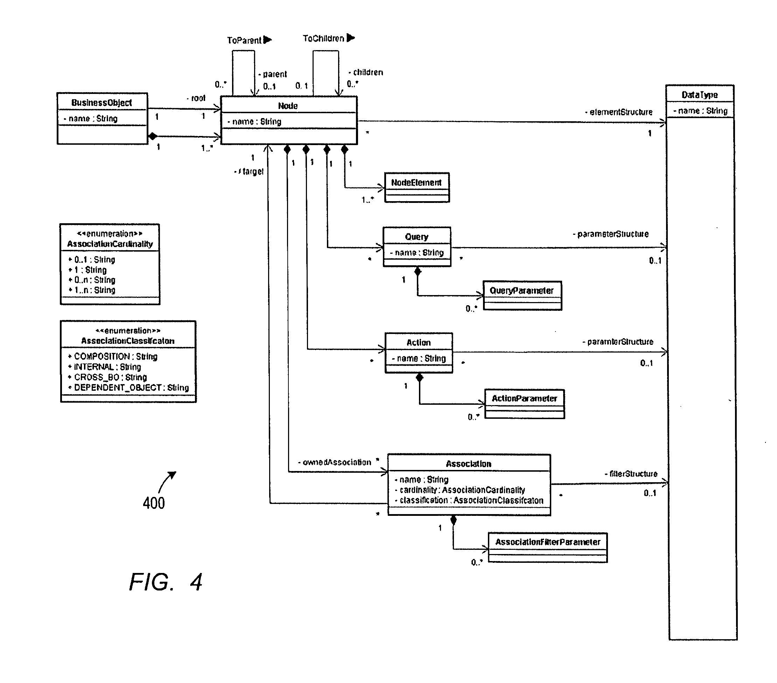

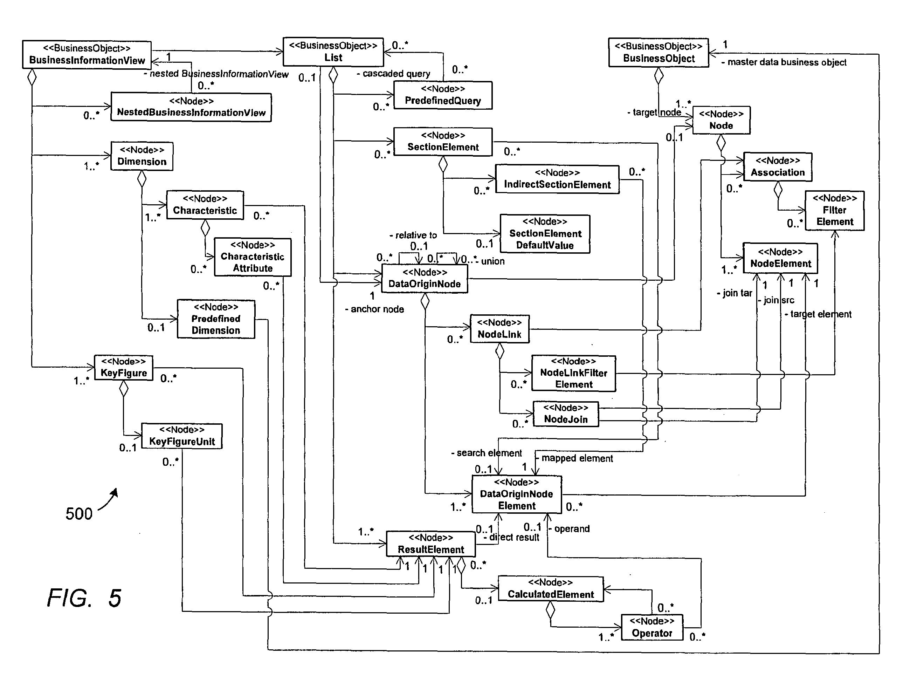

Metadata model layer 310 includes metadata models as described above, and illustrates logical dependencies between the metadata models. As also described above, each metadata model may comprise an instance of a meta-metadata model. FIG. 4 is a diagram of meta-metadata model 400 according to some embodiments. FIG. 5 is a diagram illustrating the modeling of different metadata models (e.g., Business Information View; List; Business Object) using meta-metadata model 400. FIG. 5 also illustrates how the different metadata models can reference each other according to some embodiments.

Meta-metadata model 400 may be identical to the business object metadata model of layer 310, such that the business object metadata model is an instance of itself. As mentioned above, tools have been developed to support development, transactions and lifecycle management of instances (e.g., SalesOrder SO435539) of a specific business object model (e.g., SalesOrder). If each other metadata model of layer 310 is also an instance of meta-metadata model 400, then these tools may also be used to support development, transactions and lifecycle management of instances (i.e., specific object models) of any of the metadata models.

Metadata implementation layer 320 includes a business object processing framework (BOPF) to implement specific object models derived from the metadata models of layer 310. Layer 320 may manage model instance persistencies as well as a lifecycle thereof. The BOPF may also implement model consistency constraints as is known.

The BOPF of metadata implementation layer 320 may generate appropriate database tables in persistency layer 330 to store data structures comprising object models derived from the metadata models of layer 310. Available database tables (e.g., optimized database tables or proxy data) may also be used and connected to the BOPF business object implementation. A persisted repository object model may also include unstructured data that may be referenced.

ABAP services 340 represent a generic connection to ABAP services provided for all instances (i.e., object models) derived from the repository metadata models. Such services may include transport and correction tools and an ABAP development workbench. ABAP services 340 may be similar to corresponding ABAP services currently provided for business object instances.

Access layer 350 provides uniform mechanisms to access repository object models. For example, Business Query Language/BSA++ may be used to access design time aspects of the object models. During runtime, access layer may provide specific performance-optimized application programming interfaces and buffering facilities.

Repository services 360 also reflect services that may be conventionally available with respect to object model instances, but not with respect to object models themselves. For example, process enforcement services may use "status and action management" as well as business management tasks.

Each system and device described herein may be implemented by any number of devices in communication via any number of other public and/or private networks. Two or more of devices of may be located remote from one another and may communicate with one another via any known manner of network(s) and/or a dedicated connection. Moreover, each device may comprise any number of hardware and/or software elements suitable to provide the functions described herein as well as any other functions. Other topologies may be used in conjunction with other embodiments.

All systems and processes discussed herein may be embodied in program code stored on one or more computer-readable media and executed by a processor. Such media may include, for example, a floppy disk, a CD-ROM, a DVD-ROM, a Zip™ disk, magnetic tape, and solid state RAM or ROM memories. Embodiments are therefore not limited to any specific combination of hardware and software.

The embodiments described herein are solely for the purpose of illustration. Those in the art will recognize other embodiments may be practiced with modifications and alterations limited only by the claims.

## Claims

1. A computer-implemented system comprising:
a data structure comprising a business object metadata model describing a generic business object model;
executable program code of a transactional service to create a second data structure comprising a specific business object model based on the business object metadata model; and
a persistent storage to store the second data structure comprising the specific business object model.

2. A system according to Claim 1, further comprising a third data structure comprising a user interface metadata model describing a generic user interface model,
wherein the transactional service is to create a fourth data structure comprising a specific user interface model based on the user interface metadata model, and
wherein the persistent storage is to store the fourth data structure comprising the specific user interface model.

3. A system according to Claim 2, wherein the user interface metadata model and the business object metadata model conform to a same meta-metadata model.

4. A system according to Claim 2 or 3, further comprising:
executable program code of an application programming interface to read the stored second data structure, to write to the stored second data structure, to read the stored fourth data structure, to write to the stored fourth data structure.

5. A system according to any one of Claims 2 to 4, further comprising:
a lifecycle management service to manage a lifecycle of the specific business object model and a lifecycle of the specific user interface model.

6. A system according to any one of the preceding Claims, further comprising:
executable program code of an application programming interface to read the stored second data structure and to write to the stored second data structure; and/or
a lifecycle management service to manage a lifecycle of the specific business object model; and/or
executable program code of a query language server to respond to queries associated with the stored specific business object model.

7. A system according to any one of the preceding Claims, wherein the persistent storage is to store the specific business object model in database tables.

8. A method comprising:
creating an electronic data structure comprising a business object metadata model describing a generic business object model;
executing, using a processor, program code of a transactional service to create a second electronic data structure comprising a specific business object model based on the business object metadata model; and
storing the second electronic data structure comprising the specific business object model in a persistent storage.

9. A method according to Claim 8, further comprising:
creating a third electronic data structure comprising a user interface metadata model describing a generic user interface model,
executing, using the processor, program code of the transactional service to create a fourth electronic data structure comprising a specific user interface model based on the user interface metadata model, and
storing the fourth data structure comprising the specific user interface model in the persistent storage.

10. A method according to Claim 9, wherein the user interface metadata model and the business object metadata model conform to a same meta-metadata model.

11. A method according to Claim 9 or 10, further comprising:
executing, using the processor, program code of an application programming interface to read the stored electronic second data structure, to write to the stored electronic second data structure, to read the stored fourth electronic data structure, to write to the stored fourth electronic data structure.

12. A method according to any one of Claims 9 to 11, further comprising:
executing, using the processor, program code of a lifecycle management service to manage a lifecycle of the specific business object model and a lifecycle of the specific user interface model.

13. A method according to any one of Claims 8 to 12, further comprising:
executing, using the processor, program code of an application programming interface to read the stored second electronic data structure and to write to the stored second electronic data structure; and/or
executing, using the processor, program code of a lifecycle management service to manage a lifecycle of the specific business object model; and/or
executing, using the processor, program code of a query language server to respond to queries associated with the stored specific business object model.

14. A method according to Claim 10, wherein storing the second electronic data structure comprising the specific business object model in the persistent storage:
storing the second electronic data structure in database tables of the persistent storage.
